# EUROPÄISCHE PATENTANMELDUNG

(11) **EP 0 866 468 A1**
(43) Veröffentlichungstag der Anmeldung: **23.09.1998**
(21) Anmeldenummer: 98104050.4
(22) Anmeldetag: 06.03.1998
(51) Int. Cl.: G21D 3/00, G05B 23/02

(54) **Verfahren und System zur chronologischen Protokollierung von Prozesssignalen einer technischen Anlage**

(30) Priorität: 20.03.1997 DE 19711686
(71) Anmelder: SIEMENS AKTIENGESELLSCHAFT, 80333 München (DE)
(72) Erfinder: Bögge, Michael, Dipl.-Ing., 91080 Spardorf (DE); Vielberg, Reinhard, Dipl.-Ing., 91330 Eggolsheim (DE); Kühne, Olaf, Dipl.-Ing., 91058 Erlangen (DE)

(57) **Zusammenfassung**

Um besonders einfach und schnell eine zeitfolgerichtige Protokollierung von Prozeßsignalen (PS) zu ermöglichen, werden erfindungsgemäß in chronologischer Folge zu speichernde Prozeßsignale (PS) anhand ihrer Qualität aus einem Prozeßsignalstrom selektiert und jeweils mit mindestens einem Informationselement eines dem Prozeßsignal (PS) zugrundeliegenden Datenmodells verknüpft, wobei jedes Prozeßsignal (PS) mit dem Zeitpunkt seiner Erfassung und mit dem jeweils zugehörigen Informationselement in Form einer Protokollzeile aufbereitet und hinterlegt wird.

## Beschreibung

Die Erfindung bezieht sich auf ein Verfahren zur chronologischen Protokollierung von Prozeßsignalen einer technischen Anlage, insbesondere einer Kraftwerksanlage, bei dem in einem sogenannten Ringspeicher eine Vielzahl von Prozeßsignalen hinterlegt werden. Sie betrifft weiter ein nach diesem Verfahren arbeitendes System.

In einer Kraftwerksanlage soll ein Prozeßführungs- und Informationssystem, im weiteren Prozeßsystem genannt, die aktuellen Betriebszustände der Anlage erkennbar machen und Abweichungen von einem Sollzustand melden sowie Diagnosen von möglicherweise auftretenden Fehlern ermöglichen. Dazu ist eine umfangreiche Erfassung und Speicherung von die Betriebszustände aller Anlagenteile charakterisierenden Meßwerten erforderlich. Mit zunehmender Energie- und/oder Arbeitsausnutzung derartiger Kraftwerksanlagen und mit zunehmender Steigerung ihres Sicherheitsstandards wachsen auch die Anforderungen an das Prozeßsystem hinsichtlich der Verarbeitung, Speicherung und Analyse sowie Protokollierung großer Datenmengen.

Die Speicherung von zeitlichen Prozeßabläufen erfolgt üblicherweise durch chronologische Hinterlegung von aus Meßwerten und/oder Meßsignalen abgeleiteten Prozeßsignalen. Die Prozeßsignale umfassen dabei einerseits in der Art von dynamischen Komponenten Meßdaten, die beispielsweise jeweils einen Meßwert oder ein Meßsignal zum Zeitpunkt seiner Erfassung numerisch charakterisieren. Andererseits umfassen die Prozeßsignale aber auch in der Art statischer Komponenten ein sogenanntes Datenmodell. Im Datenmodell sind dabei beispielsweise Randbedingungen hinterlegt, unter denen Meßdaten gewonnen wurden. Dabei sind als Randbedingungen insbesondere Prozeßkennzeichen, Begleittexte (Klartexte), Meßbereiche, ein Erfassungszyklus und/oder Protokollvorschriften von Bedeutung.

Insbesondere zu Analyse- oder Diagnosezwecken können aus den gespeicherten Prozeßsignalen Protokolle oder Abbilder des in der Anlage ablaufenden Prozesses erstellt werden, die komplexe Zustände der Anlage zu vorgebbaren Zeitpunkten beschreiben. Da, insbesondere für Kraftwerksanlagen, derartige Diagnosen für jeden beliebigen Tag mindestens innerhalb der letzten zwei Jahre erstellbar sein sollen, müssen große Datenmengen zuverlässig hinterlegt werden. Zu diesem Zweck umfaßt das Prozeßsystem üblicherweise ein Datenarchivierungssystem, in dem als Prozeßsignale sowohl die Meßdaten als auch die diesen zugrundeliegenden Datenmodelle hinterlegt werden.

Im Zuge der Realisierung von papierlosen Prozeßsystemen werden keine kontinuierlichen, mit dem Prozeßablauf gleichzeitig mitlaufende Protokollierungen durchgeführt. Vielmehr werden Protokolle nur noch bei Bedarf aufgerufen, aufbereitet und auf einem Drucker oder einem Sichtgerät ausgegeben. Dazu werden nach einer Protokollanwahl die dynamischen Meßdaten (Meßwert, Erfassungszeitpunkt, Qualität) aus dem Datenarchivierungssystem, beispielsweise aus einem Ringspeicher, gelesen und mit den ebenfalls aus dem Datenarchivierungssystem gelesenen statischen Komponenten des Datenmodells (Prozeßkennzeichen, Begleittext, Protokollhinweis etc.) zu Protokollzeilen verknüpft. Dabei ist die Zeit zum Aufbereiten der dynamischen und statischen Komponenten eines Protokolls zu Protokollzeilen abhängig vom gewählten Zeitbereich sowie vom zugehörigen Umfang der Meßdaten. Aufgrund der großen Mengen an Meßdaten einer großtechnischen Anlage ist die Suche nach den auszuwertenden Meßdaten und den diesen zugrundeliegenden Datenmodellen besonders aufwendig und zeitintensiv. Zudem ist es bei vom Normalzustand abweichenden Anlagenzuständen, insbesondere bei Störfällen, notwendig, die Prozeßsignale in Form von Störungszustands- oder Meldungsablaufprotokollen schnellstmöglich, d.h. innerhalb von wenigen Sekunden, auszugeben.

Der Erfindung liegt daher die Aufgabe zugrunde, ein Verfahren zur chronologischen Protokollierung von Prozeßsignalen einer technischen Anlage anzugeben, das in besonders einfacher Weise und besonders schnell unter Berücksichtigung aller erfaßten Meßwerte eine zeitfolgerichtige Auswertung und/oder Protokollierung von Prozeßsignalen ermöglicht. Weiterhin soll ein zur Durchführung des Verfahrens besonders geeignetes System angegeben werden.

Die erstgenannte Aufgabe wird erfindungsgemäß gelöst, indem in chronologischer Folge und damit zeitfolgerichtig zu speichernde Prozeßsignale anhand ihrer Qualität aus einem Prozeßsignalstrom selektiert und jeweils mit mindestens einem Informationselement eines dem Prozeßsignal zugrundeliegenden Datenmodell verknüpft werden, wobei jedes Prozeßsignal mit dem Zeitpunkt seiner Erfassung und mit dem jeweils zugehörigen Informationselement in Form einer Protokollzeile aufbereitet und hinterlegt wird. Unter Qualität des Prozeßsignals wird hierbei insbesondere der Abstand dessen Wertes von einem Normal- oder Sollwert verstanden, wobei das Ergebnis der Interpretation dieses Abstandes oder einer entsprechenden Abweichung ein Maß für die Signalqualität ist.

Die Erfindung geht dabei von der Überlegung aus, daß für eine schnellstmögliche Protokollierung die aktuell erfaßten Prozeßsignale in Abhängigkeit vom Qualitätszustand entsprechenden Protokollarten zugeordnet werden können. Dazu sollten die zu entsprechenden Protokollarten gehörenden Prozeßsignale aus dem alle Prozeßsignale umfassenden Prozeßsignalstrom selektiert und mit dem im Datenmodell hinterlegten, das jeweilige Prozeßsignal charakterisierenden Informationselement verknüpft sowie in einen Puffer oder Speicher in einer für die jeweilige Protokollart gerechten Form hinterlegt werden, z.B. in Form von Protokollzeilen. Somit wären bei einer Protokoll- oder Analyseanforderung die Prozeßsignale protokollgerecht aufbereitet, so daß eine zeitfolgerichtige Auswertung sowie Darstellung aller zu der gewählten Protokollart gehörenden und zu berücksichtigenden Prozeßsignale beschleunigt wird.

Zweckmäßigerweise wird jede Protokollzeile anhand der Qualität des Prozeßsignals einem entsprechenden Protokoll zugeordnet und in diesem hinterlegt. Zur Hinterlegung oder Speicherung umfaßt ein Hauptspeicher oder Archivspeicher eine Anzahl von Puffern oder Teilarchiven, die jeweils eine Protokollart repräsentieren. Beispielsweise repräsentiert ein Abbildpuffer die Protokollart "Störungszustandsprotokoll". In dem Störungszustandsprotokoll werden dabei nur diejenigen Prozeßsignale mit der Qualität "gestört" hinterlegt, d.h. alle jene Prozeßsignale, die vom Normalzustand abweichen oder deren Meßwert einen Grenzwert überschritten haben, werden dem Störungszustandsprotokoll zugeordnet und in dem dazugehörigen Abbildpuffer hinterlegt.

Um nur die für eine Protokollart relevanten Prozeßsignale auszugeben oder darzustellen, wird jede Protokollzeile bei einer Änderung der Qualität des zugrundeliegenden Prozeßsignales aktualisiert. Mit anderen Worten: Liegt beispielsweise der Grund des Eintrages eines Prozeßsignales in das Störungszustandsprotokoll nicht mehr vor und ist somit das betreffende Prozeßsignal aufgrund dessen Validierung oder aufgrund eines Wechsels des Signalzustands nicht mehr gestört, so wird die im Abbildpuffer abgelegte entsprechende Protokollzeile gelöscht oder bei einer Protokollanfrage mit einem entsprechenden Vermerk ausgegeben.

Damit z. B. für Störfallanalysen nur diejenigen Prozeßsignale chronologisch ausgegeben werden, die während des Störfalls erfaßt worden sind, werden für eine auf dem Störfall basierende Protokollanwahl oder -anforderung nur die diesem Protokoll zugrundeliegenden Protokollzeilen ausgelesen und dargestellt. Je nach Protokollanforderung werden nur diejenigen Teilarchive oder Puffer zum Auffinden der für den zu untersuchenden Zeitbereich relevanten Prozeßsignale berücksichtigt, die der angeforderten Protokollart zugeordnet sind. Durch ein derartiges Begrenzen des Suchbereiches in einem großen Archivspeicher oder Datenarchiv sind die Prozeßsignale schnell auffindbar und demzufolge aufgrund der bereits in Protokollzeilen erfolgten Hinterlegung schnellstmöglich ausgebbar.

Bezüglich des Systems wird die Aufgabe erfindungsgemäß gelöst, indem an ein Analysemodul ein erster Speicher zur Speicherung von Prozeßsignalen und ein zweiter Speicher zur Speicherung von Informationselementen eines Datenmodells angeschlossen sind, wobei dem Analysemodul ein Protokollspeicher nachgeschaltet ist.

Um die Prozeßsignale schnellstmöglich protokollieren zu können, ist an den Protokollspeicher ein Protokollmodul zur Ausgabe von wählbaren chronologischen Protokollen aus den Prozeßsignalen angeschlossen. Beispielsweise umfaßt das Protokollmodul einen Drucker oder ein Sichtgerät.

Die mit der Erfindung erzielten Vorteile bestehen insbesondere darin, daß durch Speicherung der Prozeßsignale und den dazugehörigen Informationselementen des Datenmodells in Form von Protokollzeilen in Protokollarten charakterisierenden Archivbereichen (Puffer) eine schnelle chronologische Protokollierung aller zu berücksichtigenden Prozeßsignale gewährleistet ist.

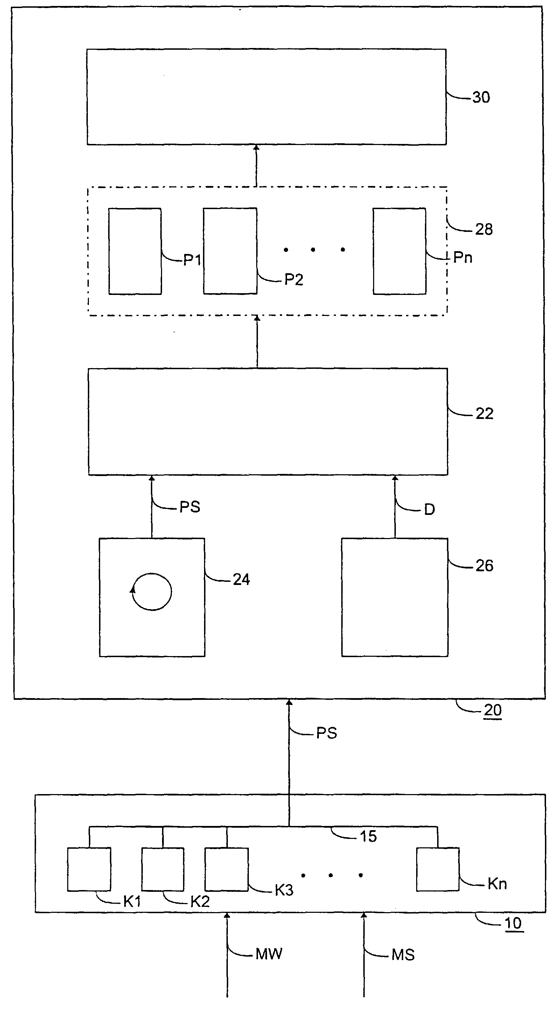

Ein Ausführungsbeispiel der Erfindung, weitere Vorteile und Details werden nachfolgend anhand der Zeichnung näher erläutert. Darin zeigt die Figur im Ausschnitt ein System mit zur Durchführung eines Verfahrens zur chronologischen Protokollierung von Prozeßsignalen einer technischen Anlage vorgesehenen Komponenten.

Ein Automatisierungssystem 10 gemäß der Figur umfaßt eine Anzahl von Komponenten oder Datenverarbeitungseinheiten K1 bis Kn. In einer nicht näher dargestellten technischen Anlage erfaßte Meßwerte MW und/oder Meldesignale MS werden den zugehörigen Komponenten K1 bis Kn des Automatisierungssystems 10 zugeführt. In den jeweiligen Komponenten K1 bis Kn werden die Meßwerte MW und/oder Meldesignale MS vorverarbeitet und entsprechenden Prozeßsignalen PS zugeordnet. Dabei weist jedes Prozeßsignal PS eine Information über den Zeitpunkt der Erfassung sowie den numerischen Wert des zugrundeliegenden Meßwertes MW oder des Meldesignals MS auf.

Die Prozeßsignale PS werden über ein Bussystem 15 einem zentralen Prozeßsystem 20, z.B. einem Prozeßführungs- und/oder Prozeßinformationssystem, zugeführt. Das Prozeßsystem 20 kann dabei insbesondere ein Personalcomputer oder eine andere Datenverarbeitungseinheit sein.

Das Prozeßsystem 20 umfaßt ein Analysemodul 22, an das eingangsseitig ein Zwischenspeicher 24 und eine Datenmodellquelle 26 sowie ausgangsseitig ein Protokollspeicher 28 angeschlossen sind. Wie in der Figur schematisch dargestellt, umfaßt der Protokollspeicher 28 eine Anzahl von Teilarchiven oder Puffer P1 bis Pn. Darüber hinaus ist der Protokollspeicher 28 mit einem Ausgabemodul 30 verbunden.

Der Zwischenspeicher 24, vorzugsweise ein Ringspeichermodul, dient zur vorläufigen Speicherung der Prozeßsignale PS des Automatisierungssystems 10. Die Datenmodellquelle 26 stellt dem Analysemodul 22 ein das jeweilige Prozeßsignal PS charakterisierende Datenmodell-File D, das mindestens ein Informationselement des Datenmodells umfaßt, zur Verfügung. Die Informationselemente umfassen z.B. die jedem Prozeßsignal zugrundeliegende Kennzeichnung und Begleittexte sowie Meßbereiche und/oder Erfassungszyklen.

Die Datenmodellquelle 26 kann beispielsweise ein Datenmodellrechner oder auch eine relationale Datenbank sein. Ein Datenmodellrechner generiert dabei selbsttätig das aktuelle Datenmodell-File D, wohingegen eine relationale Datenbank die in ihr beispielsweise in Form von Tabellen hinterlegten Datenmodell-Files D verwaltet.

Beim Betrieb des Prozeßsystems 20 wird eine Anzahl von Prozeßsignalen PS mit dem jeweils zugehörigen Zeitmerkmal sowie dem numerischen Wert in dem Zwischenspeicher 24 zeitfolgerichtig zwischengespeichert. Für eine verschiedene Protokollarten repräsentierende Archivierung der Prozeßsignale PS wird der Zwischenspeicher 24 vom Analysemodul 22 ausgelesen. Der Leseprozeß der Prozeßsignale PS aus dem Zwischenspeicher 24 wird zyklisch getriggert. Werden demnach über einen projektierbaren Zeitbereich (z.B. 1 Sekunde) keine Prozeßsignale PS erfaßt, wird automatisch der mitgeführte Lesezeiger aktualisiert.

Das Analysemodul 22 erkennt anhand des Qualitätsmerkmals des zu untersuchenden Prozeßsignals PS, für welche Protokollart das Prozeßsignal PS relevant ist. Darüber hinaus liest das Analysemodul 22 das dem Prozeßsignal PS zugehörige Datenmodell-File D aus der Datenmodellquelle 26 aus. Das Prozeßsignal PS - und damit die sogenannte dynamische Komponente eines Protokolls - sowie das entsprechende Datenmodell-File D - und damit die sogenannte statische Komponente eines Protokolls - werden in dem Analysemodul 22 zu einer Protokollzeile verknüpft. Anschließend wird jede Protokollzeile in dem der jeweiligen Protokollart zugeordneten Puffer P1 bis Pn des Protokollspeichers 28 hinterlegt.

Der Puffer P1 ist, z.B. für ein Meldungsablaufprotokoll, in Form eines Ringspeichers ausgeführt. Die Größe des Puffers P1 ist projektier- oder vorgebbar; d.h. es ist eine Anzahl von Protokollzeilen oder ein Zeitbereich, für den die aktuell erfaßten Prozeßsignale PS in das Meldungsablaufprotokoll gespeichert werden, vorgebbar. Für das Meldungsablaufprotokoll werden die durch das Analysemodul 22 erzeugten Protokollzeilen in den Puffer P1 zeitfolgerichtig hinterlegt. Ist der Puffer P1 komplett gefüllt, wird die jeweils zeitlich älteste Protokollzeile durch die aktuellste überschrieben. Bei einer Anforderung für ein Meldungsablaufprotokoll durch das Protokollmodul 30 werden beispielsweise die für den zu untersuchenden Zeitbereich relevanten, um einen Protokollkopf und - fuß ergänzten Protokollzeilen als Protokoll ausgegeben, z.B. auf einen Drucker oder auf ein Sichtgerät.

Für eine weitere Protokollart, z.B. ein Störungszustandsprotokoll, ist der Puffer P2 in Form eines Abbildpuffers ausgeführt. In dem Abbildpuffer sind die Prozeßsignale PS und deren Protokollzeilen nach einem wählbaren Informationselement sortiert, z.B. nach dem Prozeßkennzeichen. Analog zum Meldungsablaufprotokoll selektiert das Analysemodul 22 die für das Störungszustandsprotokoll relevanten Prozeßsignale PS anhand des zugehörigen Qualitätsmerkmals aus dem im Zwischenspeicher 24 hinterlegten Prozeßsignalstrom heraus. Anschließend werden die Prozeßsignale PS mit den jeweiligen Datenmodell-Files D zu entsprechenden Protokollzeilen generiert und im Puffer P2 hinterlegt. Falls für ein Prozeßsignal PS die Ursache für die Störung und somit der Eintragungsgrund in den Puffer P2 beseitigt worden ist; d.h. hat sich der Signalzustand oder die Qualität des Prozeßsignals PS geändert, so wird die entsprechende Protokollzeile im Puffer P2 entweder gelöscht oder sie erhält einen Zustandsvermerk. Bei einer Anwahl des Störungszustandsprotokolls werden alle im Puffer P2 hinterlegten Protokollzeilen als Protokoll auf das Ausgabemodul 30 ausgegeben.

Darüber hinaus können weitere Protokollarten sowie Zusatzselektionen, z.B. zusätzlich zu Zeitbereichen auch Bereiche von Protokollzeilen, definiert sein. Die im Protokollspeicher 28 definierten Puffer P1 bis Pn werden bei einem Systemanlauf des Prozeßsystems 20 in Abhängigkeit von den gewählten Protokollarten initialisiert und aufgebaut.

Bedingt durch die Speicherung der Prozeßsignale PS in Form von Protokollzeilen in verschiedenen Protokollarten zugeordneten Speicherbereichen ist eine kontinuierliche Protokollaufbereitung mehrerer Protokollarten sichergestellt. Die kontinuierliche Protokollaufbereitung gewährleistet darüber hinaus eine Verkürzung der Zeit zwischen Protokollanwahl und - ausgabe von ca. 30 s auf etwa 3 s.

## Patentansprüche

1. Verfahren zur chronologischen Protokollierung von Prozeßsignalen (PS) einer technischen Anlage, bei dem in chronologischer Folge zu speichernde Prozeßsignale (PS) anhand ihrer Qualität aus einem Prozeßsignalstrom selektiert werden und jeweils mit mindestens einem Informationselement eines dem Prozeßsignal (PS) zugrundeliegenden Datenmodells verknüpft werden, wobei jedes Prozeßsignal (PS) mit dem Zeitpunkt seiner Erfassung und mit dem jeweils zugehörigen Informationselement in Form einer Protokollzeile aufbereitet und hinterlegt wird.

2. Verfahren nach Anspruch 1, bei dem jede Protokollzeile einem die Qualität des Prozeßsignals (PS) charakterisierenden Protokoll zugeordnet und in diesem hinterlegt wird.

3. Verfahren nach Anspruch 1 oder 2, bei dem jede Protokollzeile bei Anderung der Qualität des Prozeßsignals (PS) aktualisiert wird.

4. Verfahren nach einem der Ansprüche 1 bis 3, bei dem für ein vorgebbares Protokoll die diesem zugrundeliegenden Protokollzeilen gelesen und dargestellt werden.

5. System zur chronologischen Protokollierung von Prozeßsignalen (PS) einer technischen Anlage, mit einem Analysemodul (22), an das ein Zwischenspeicher (24) zur Speicherung von Prozeßsignalen (PS) und eine Datenmodellquelle (26) zur Verwaltung von Informationselementen eines Datenmodells angeschlossen sind, sowie mit einem dem Analysemodul (22) nachgeschalteten Protokollspeicher (28).

6. System nach Anspruch 5, bei dem an den Protokollspeicher (28) ein Protokollmodul (30) zur Erstellung von wählbaren chronologischen Protokollen aus den Prozeßsignalen (PS) angeschlossen ist.
